# EUROPÄISCHE PATENTANMELDUNG

(11) **EP 0 566 024 A1**
(43) Veröffentlichungstag der Anmeldung: **20.10.1993**
(21) Anmeldenummer: 93105793.9
(22) Anmeldetag: 07.04.1993
(51) Int. Cl.: B62M 25/08

(54) **Elektrische Stellvorrichtung**

(30) Priorität: 13.04.1992 DE 4212320
(71) Anmelder: Fichtel & Sachs AG, D-97419 Schweinfurt (DE)
(72) Erfinder: Fey, Rainer, W-8720 Schweinfurt (DE); Thein, Albert, W-8728 Hassfurt (DE)
(74) Vertreter: Prechtel, Jörg, Dipl.-Phys. Dr.

(57) **Zusammenfassung**

Es wird eine elektrische Stellvorrichtung (14), insbesondere ein elektrischer Kettenwerfer für Fahrräder, vorgeschlagen, umfassend ein Stellelement (44), eine Antriebsvorrichtung (42) für das Stellelement, eine Steuereinheit (18) zum Steuern der Antriebsvorrichtung und eine mit der Steuereinheit verbundene Vorgabe-Einrichtung (52) zur Vorgabe einer Mehrzahl von Sollwerten, wobei jeder dieser Sollwerte einer Betriebsstellung des Stellelements entspricht. Bei der erfindungsgemäßen Stellvorrichtung ist das Stellelement (44) zur Festlegung, ggf. Korrektur, der Sollwerte jeweils in eine einer gewünschten Betriebsstellung entsprechende Soll-Stellung bewegbar und der sich ergebende Momentanwert als neuer Sollwert in der Vorgabe-Einrichtung (52) abspeicherbar.

## Beschreibung

Die Erfindung betrifft eine elektrische Stellvorrichtung, insbesondere einen elektrischen Kettenwerfer für Fahrräder, umfassend ein in eine Mehrzahl von Betriebsstellungen einstellbares Stellelement, eine Antriebsvorrichtung zum wahlweisen Einstellen des Stellelements in jeweils eine der Betriebsstellungen, eine Steuereinheit zum Steuern der Antriebsvorrichtung durch Ausgabe von "Betriebsstellung ändern"-Signalen und "Betriebsstellung erreicht"-Signalen an die Antriebsvorrichtung, eine mit der Steuereinheit verbundene Sensor-Vorrichtung zum Erfassen des Momentanwerts eines einer Momentanstellung des Stellelements entsprechenden Parameters, eine mit der Steuereinheit verbundene Vorgabe-Einrichtung zur Vorgabe einer Mehrzahl von Vorgabewerten des Parameters, wobei jeder dieser Vorgabewerte einer der Betriebsstellungen des Stellelements entspricht.

Derartige elektrische Stellvorrichtungen sind bekannt. Bei einer dieser Stellvorrichtungen wird die Vorgabeeinrichtung von einer mechanischen Rastvorrichtung gebildet, deren Rastmarken den Betriebsstellungen des Stellelements entspricht. Bei einer Verstellung des Stellelements tastet ein Sensor diese Rastmarken ab und gibt ein entsprechendes Signal an eine Steuereinheit weiter, die bei Erreichen einer gewünschten Betriebsstellung des Stellelements der das Stellelement antreibenden Antriebsvorrichtung das "Betriebsstellung erreicht"-Signal übermittelt. Die Rastvorrichtung der herkömmlichen Stellvorrichtung muß hierbei dem jeweiligen Einsatzzweck entsprechend ausgebildet sein. Bei elektrischen Kettenwerfern für Fahrräder muß beispielsweise für die unterschiedlichen Zahnkranzpakete jeweils eine spezielle Rastvorrichtung eingesetzt werden. Somit müssen für verschiedene Zahnkranzpakete verschiedene elektrische Stellvorrichtungen bereitgestellt werden.

Darüber hinaus müssen bei der Montage der herkömmlichen elektrischen Stellvorrichtung zwei Arbeitsschritte gleichzeitig ausgeführt werden, nämlich der der Befestigung der Stellvorrichtung, bspw. am Fahrradrahmen, und der der Justierung der Rastvorrichtung, damit die Rastmarken der Rastvorrichtung auch tatsächlich den gewünschten Betriebsstellungen des Stellelements der Antriebsvorrichtung entsprechen. Hierdurch wird die ordnungsgemäße Montage der herkömmlichen Stellvorrichtung äußerst erschwert.

Demgegenüber ist es Aufgabe der Erfindung, eine elektrische Stellvorrichtung anzugeben, deren Montage einerseits vereinfacht ist die andererseits bei verschiedenen Anwendungszwecken universell einsetzbar ist.

Diese Aufgabe wird erfindungsgemäß dadurch gelöst, daß das Stellelement zur Festlegung, ggf. Korrektur, der Vorgabewerte jeweils in eine einer gewünschten Betriebsstellung entsprechende Soll-Stellung bewegbar und der sich ergebende Momentanwert als neuer Vorgabewert in der Vorgabe-Einrichtung abspeicherbar ist. Durch diese Maßnahmen kann die Anpassung der erfindungsgemäßen elektrischen Stellvorrichtung an die jeweilige Anwendung, beispielsweise das jeweils verwendete Zahnkranzpaket, nach deren Montage erfolgen, so daß die Montage selbst nicht mit so hoher Präzision erfolgen muß. Dies erleichtert die Anbringung der elektrischen Stellvorrichtung, da die Befestigung und die Justierung der Stellvorrichtung erfindungsgemäß voneinander entkoppelt in zwei unabhängigen Arbeitsschritten vorgenommen werden können und die Einstellung der Stellvorrichtung ggf. auch nachträglich noch korrigiert werden kann, ohne die Befestigung der Stellvorrichtung am Fahrrad wieder lösen zu müssen. Darüber hinaus kann die erfindungsgemäße elektrische Stellvorrichtung in einfacher Weise auf unterschiedliche Zahnkranzpakete angepaßt werden, da die den gewünschten Betriebsstellungen entsprechenden Soll-Werte in der Vorgabeeinrichtung abspeicherbar und somit in Anzahl und Wert jederzeit veränderbar sind.

Die Veränderbarkeit der in der Vorgabeeinrichtung gespeicherten Soll-Werte kann in einfacher Weise dadurch bereitgestellt werden, daß die Vorgabe-Einrichtung ein löschbarer und wieder programmierbarer Festwertspeicher ist.

In einer Ausführungsform der Erfindung ist vorgesehen, daß die Steuereinheit einen steuernden Mikro-Chip umfaßt und daß die Vorgabe-Einrichtung mit dem Mikro-Chip betriebsmäßig verbunden ist. Bei dieser Ausführungsform können in der elektrischen Stellvorrichtung serienmäßig gefertigte und somit preisgünstig erhältliche Bauelemente eingesetzt werden.

Alternativ ist es jedoch auch möglich, daß die Steuereinheit einen steuernden Mikro-Chip umfaßt und daß die Vorgabe-Einrichtung auf dem Mikro-Chip integriert ist. Hierdurch kann die Steuereinheit der elektrischen Stellvorrichtung besonders raumsparend ausgebildet werden.

Um verhindern zu können, daß das Stellelement aufgrund eines Fehlers bei der Steuerung (open-loop control) der Antriebsvorrichtung nicht in die gewünschte Betriebsstellung eingestellt wird, wird vorgeschlagen, daß die Steuereinheit einen Komparator umfaßt zum Vergleich des jeweiligen Momentanwerts des Parameters mit dem einer, bspw. durch einen Benutzer, extern vorgebbaren Betriebsstellung entsprechenden Vorgabewert, wobei die Steuereinheit das "Betriebsstellung ändern"-Signal ausgibt, wenn der Komparator eine Nicht-Übereinstimmung von Momentanwert und Vorgabewert feststellt, und das "Betriebsstellung erreicht"-Signal ausgibt, wenn der Komparator eine Übereinstimmung von Momentanwert und Vorgabewert feststellt.

Erfindungsgemäß kann die Antriebsvorrichtung das Stellelement also geregelt (closed-loop control) auf die gewünschte Betriebsstellung einstellen.

Die Erfindung betrifft ferner eine Kettenschaltung für ein Fahrrad mit wenigstens einer erfindungsgemäßen elektrischen Stellvorrichtung.

Darüber hinaus betrifft die Erfindung ein Verfahren zur Festlegung und ggf. zur Korrektur von Betriebsstellungen einer elektrischen Stellvorrichtung, insbesondere eines elektrischen Kettenwerfers für Fahrräder, wie sie vorstehend beschrieben wurde. Bei dem erfindungsgemäßen Verfahren wird das Stellelement in einem ersten Schritt jeweils in eine einer gewünschten Betriebsstellung entsprechende Soll-Stellung bewegt und hierauf in einem zweiten Schritt der sich ergebende Momentanwert als neuer Vorgabewert in der Vorgabe-Einrichtung abgespeichert. Das erfindungsgemäße Verfahren ermöglicht eine optimale Anpassung der Stellvorrichtung an eine Vielzahl von Positionierungsaufgaben unter Berücksichtigung sämtlicher, in der Stellvorrichtung enthaltener Toleranzen.

Die Erfindung wird im folgenden an Ausführungsbeispielen anhand der beiliegenden Zeichnung näher erläutert werden. Es stellt dar:
- Fig. 1: eine Seitenansicht eines mit einer Steuervorrichtung für einen elektrischen Kettenwerfer versehenen Fahrrads;
- Fig. 2: eine schematische Darstellung zur Erläuterung der Funktion der erfindungsgemäßen Steuervorrichtung; und
- Fig. 3: eine Ansicht analog Fig. 1 eines mit zwei Stellvorrichtungen versehenen Fahrrads.

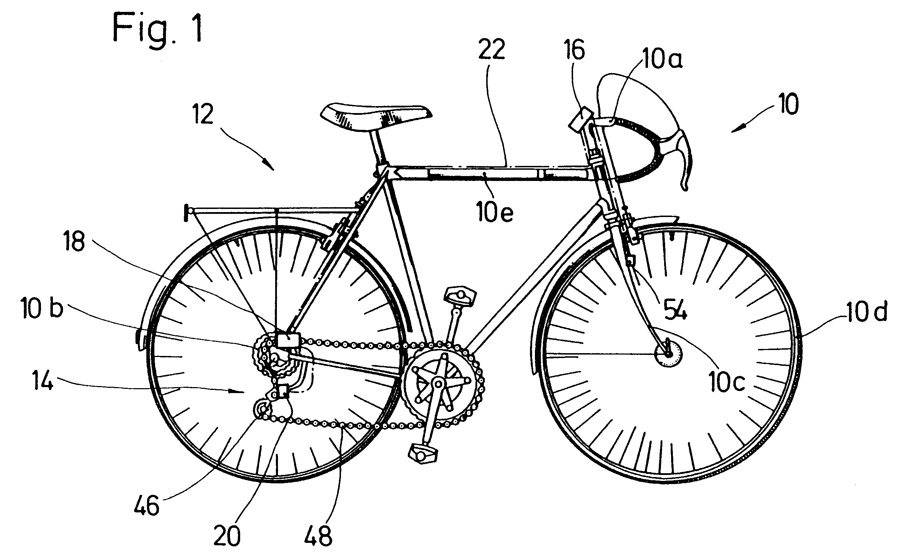

In Fig. 1 ist eine Seitenansicht eines im folgenden mit 10 bezeichneten Fahrrads dargestellt, welches mit einer erfindungsgemäßen Steuervorrichtung 12 für einen elektrischen Kettenwerfer 14 versehen ist. Die Steuervorrichtung 12 umfaßt einen am Fahrradlenker 10a angebrachten Signalgeber 16, über welchen ein Fahrer des Fahrrads 10 einen gewünschten neuen Gang für einen Gangwechsel eingeben kann, sowie eine im Bereich der Hinterradnabe 10b angeordnete Steuereinheit 18 zum Steuern des Stellglieds 20 des Kettenwerfers 14. Der Signalgeber 16 und die Steuereinheit 18 sind über eine Signalleitung 22 miteinander verbunden.

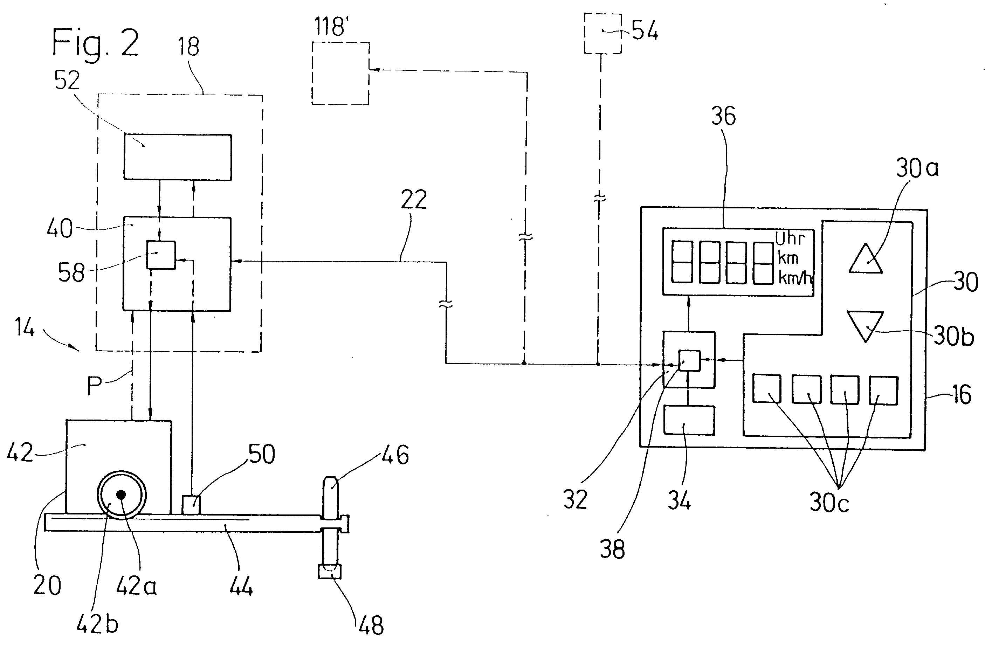

Im folgenden wird anhand von Fig. 2 im einzelnen auf den Aufbau und die Funktion der Steuervorrichtung eingegangen werden.

Der Signalgeber 16 umfaßt eine Eingabeeinheit 30, bspw. eine Tastatur, über welche der Fahrer in den Signalgeber 16 verschiedene Befehle eingeben kann. So kann er im normalen Fahrbetrieb beispielsweise durch Drücken einer "nach oben"-Taste 30a bzw. einer "nach unten"-Taste 30b anzeigen, daß er im nächsthöheren bzw. nächsttieferen Gang fahren möchte. Die eingegebenen Befehle werden von der Eingabeeinheit 30 an eine Signalüberwachungseinheit 32 weitergeleitet, die die Zulässigkeit des vorgegebenen Schaltbefehls überprüft. Die Signalüberwachungseinheit 32 weist hierzu einen Komparator 38 auf, der den gewünschten Gang mit den in einer Menge von für den momentan eingelegten Gang zulässigen Zielgängen enthaltenen Gängen vergleicht. Für jeden der möglichen Gänge der Kettenschaltung ist in einer Speichereinrichtung 34 eine solche Menge zulässiger Zielgänge gespeichert. Ein Beispiel für derartige Zielgangmengen ist in Tabelle 1 dargestellt. Gemäß Tabelle 1 ist es bspw. nicht zulässig, vom ersten Gang in den dritten Gang zu schalten. Darüber hinaus werden unsinnige Schaltvorgaben, wie bspw. ein Schalten in einen nicht vorhandenen fünften Gang, abgefangen.

**Tabelle 1**

| mögliche Gänge | zulässige Zielgänge |
|---|---|
| 1 | 2 |
| 2 | 1, 3 |
| 3 | 2, 4 |
| 4 | 3 |

Wird der eingegebene Gang von der Signalüberwachungseinheit 32 für zulässig erachtet, so wird ein entsprechender Schaltbefehl über die Signalleitung 22 an die Steuereinheit 18 des Kettenwerfers 14 weitergegeben. Darüber hinaus wird die Zulässigkeit des gewünschten Gangs an einer Anzeigevorrichtung 36 des Signalgebers 16 angezeigt, etwa durch blinkende Darstellung einer dem gewünschten Gang entsprechenden Zahl. Die Anzeigevorrichtung 36 kann beispielsweise von Flüssigkristallanzeige gebildet sein.

Wurde der ausgegebene Schaltbefehl vom Kettenwerfer 14 erfolgreich ausgeführt, so wird von der Steuereinheit 18 über die Signalleitung 22 ein "Befehl ausgeführt"-Signal an die Signalübewachungseinheit 32 übermittelt. Dem Fahrer des Fahrrads wird die erfolgreiche Ausführung des Schaltbefehls beispielsweise dadurch mitgeteilt, daß die Anzeigevorrichtung von der blinkenden zu einer permanenten Anzeige wechselt.

Der vorstehend beschriebene Schaltbefehl wird in der Steuereinheit 18 von einer zweiten Signalüberwachungseinheit 40 empfangen. Die Signalüberwachungseinheit 40 gibt ein diesem Schaltbefehl entsprechendes Stellsignal an eine Antriebsvorrichtung 42 des Stellglieds 20 aus, welches hierauf ein Stellelement 44 des Stellglieds 20 verstellt.

In Fig. 2 ist die Antriebsvorrichtung schematisch als Elektromotor 42 dargestellt, dessen Ausgangswelle 42a mit einem Zahnrad 42b verbunden ist. Das Zahnrad 42b greift in die Verzahnung des als Zahnstange ausgebildeten Stellelements 44 ein. An einem Ende der Zahnstange 44 ist ein Zahnrad 46 drehbar angebracht, über welches eine Antriebskette 48 des Fahrrads 10 geführt ist (siehe auch Figur 1).

Ein Positionsdetektor 50 erfaßt eine momentane Stellung des Stellelements 44 und gibt ein entsprechendes Signal an die zweite Signalüberwachungseinheit 40 weiter. Ein in der Signalüberwachungseinheit 40 vorgesehener Komparator 58 vergleicht den vom Positiondetektor 50 übermittelten Ist-Stellwert mit einem in einer Speichereinrichtung 52 gespeicherten Soll-Stellwert für den neu einzustellenden Gang. Stellt die Signalüberwachungseinheit 40 die Übereinstimmung von Soll- und Ist-Wert fest, so deaktiviert sie das Stellglied 20 und übermittelt der ersten Signalüberwachungseinheit 32 das vorstehend bereits erwähnte "Befehl ausgeführt"-Signal.

Nun kann es vorkommen, daß das Stellglied 20 aus irgendeinem Grund nicht in der Lage ist, den gewünschten Gang einzustellen. Dies kann beispielsweise dadurch geschehen, daß das Stellglied 20 durch Verschmutzung blockiert ist oder daß das Stellglied 20 einen zu hohen Verstellwiderstand zu überwinden hat, weil die Kette 48 des Fahrrads nicht genügend schnell bewegt wird. Sind für diesen Fall keine Vorkehrungen getroffen, so kann die Antriebsvorrichtung 42 des Stellglieds 20 durch den anhaltenden Versuch, den gewünschten Gang einzustellen, dauerhaft beschädigt werden.

Um eine derartige Beschädigung verhindern zu können, kann die zweite Überwachungseinheit 40 beispielsweise mit einem Zeitglied versehen sein, welches bei Übermittlung eines Schaltbefehls von der ersten Signalüberwachungseinheit 32 auf eine vorbestimmte Zeit gesetzt und gestartet wird und welches bei vom Komparator 58 festgestellter Übereinstimmung zwischen dem vom Positionsdetektor 50 erfaßten Ist-Stellwert und dem in der Speichereinrichtung 52 gespeicherten Soll-Stellwert des Stellelements 44 wieder angehalten wird. Kann das Stellglied 20 den gewünschten Gang nicht innerhalb der auf dem Zeitglied gesetzten Zeit einstellen, so wird bei Ablauf des Zeitglieds das Stellglied 20 von der zweiten Signalüberwachungseinheit 40 deaktiviert und der ersten Signalüberwachungseinheit 32 ein "Befehl nicht ausführbar"-Signal übermittelt. Hierauf bringt die Signalüberwachungseinheit 32 die Nichausführbarkeit des Schaltbefehls auf der Anzeigevorrichtung 36 zur Anzeige.

Anstelle des Zeitglieds kann auch ein Stromstärkesensor vorgesehen sein, der die Stromstärke des Speisestroms für den Elektromotor 42 erfaßt und ein entsprechendes Signal an die zweite Signalüberwachungseinheit 40 übermittelt (dies ist in Fig. 2 mit dem gestrichelten Pfeil P angedeutet). Überschreitet die Stromstärke des Speisestroms einen vorbestimmten Wert, so kann wiederum die Antriebsvorrichtung 42 deaktiviert und ein "Schaltbefehl nicht ausführbar"-Signal an die erste Signalüberwachungseinheit 32 übermittelt werden.

Der Signalgeber 16 kann neben der vorstehend beschriebenen Funktion des Hin- und Herschaltens zwischen verschiedenen Gängen der Kettenschaltung auch noch andere Funktionen übernehmen, beispielsweise die Anzeige der Uhrzeit, der momentanen Fahrgeschwindigkeit, der zurückgelegten Entfernung oder dergleichen. Zum Aufruf dieser Funktionen ist die Eingabeeinheit des Signalgebers 16 mit Funktionstasten 30c versehen. Darüber hinaus ist die erste Signalüberwachungseinheit 32 mit einem Geschwindigkeitssensor 54 verbunden, der ebenfalls an die als Daten-Bus ausgebildete Signalleitung 22 angeschlossen ist.

Der Geschwindigkeitssensor 54 kann beispielsweise von einer an einer Gabel 10c des Fahrrads 10 fest angeordneten Hall-Sonde und einem an einer Speiche des Vorderrads 10d angebrachten Permanentmagneten gebildet sein.

Durch die Aufteilung der einzelnen zum ordnungsgemäßen Schalten erforderlichen Funktionen auf die Signalüberwachungseinheiten 32 und 40, die nach dem Konzept der dezentralen Intelligenz an voneinander entfernten Orten angeordnet sind, nämlich die Signalüberwachungseinheit 32 im Signalgeber 16 am Lenker 10a und die zweite Signalüberwachungseinheit 40 in der Steuereinheit 18 im Bereich der Hinterradnabe 10b des Fahrrads 10, kann die Signalübertragungsrate über die Signalleitung 22 auf ein Minimum begrenzt werden. Hierdurch ist eine Signalverfälschung auf dem langen Übertragungsweg über die Signalleitung 22 und die hieraus resultierende Gefahr einer Fehlfunktion der Steuervorrichtung 12 zumindest wesentlich herabgesetzt, wenn nicht gar vollständig vermieden.

Um die Störsicherheit der Steuervorrichtung 12 weiter verbessern zu können, werden die Signale über die Signalleitung 22 nicht in analoger, sondern in digitaler Form übertragen, da digitale Signale weitaus unempfindlicher gegen Rauschen sind als analoge Signale. Um die Anzahl der benötigten Leitungen so klein wie möglich halten zu können, ist die Signalleitung 22 als serielle Datenleitung ausgebildet. Eine derartige, zur seriellen digitalen Datenübertragung geeignete Signalleitung 22 kann beispielsweise von einem einadrigen Glasfaserkabel gebildet sein. Es ist jedoch auch möglich, ein einadriges elektrisches Kabel zu verwenden, über dessen Ader sowohl die Signaldaten als auch die Status-Daten der Signalüberwachungseinheiten 32 und 40 übertragen werden. Als Masse-Anschluß kann der Rahmen 10e des Fahrrads dienen. Es ist jedoch auch möglich, zur Vermeidung hoher Übergangswiderstände zwischen den Signalüberwachungseinheiten 32 und 40 und dem Fahrradrahmen 10e in dem Elektrokabel eine zweite Ader als Masse-Anschluß vorzusehen. Auf einer dritten Ader kann evtl. noch eine Versorgungsspannung zu den Einheiten 32 und 40 geführt sein.

Der Kettenwerfer 14 der Steuervorrichtung 12 ist derart ausgebildet, daß er bei der Montage am Fahrrad 10 zunächst einfach an diesem angebracht werden kann, ohne daß hierbei besondere Rücksicht auf eine genaue Justierung des Stellglieds 20 bezüglich dem von ihm zu verstellenden Zahnkranzpaket der Kettenschaltung des Fahrrads 10 genommen werden müßte. Die Justierung des Stellglieds 20 erfolgt nach abgeschlossener Befestigung des Kettenwerfers 14 am Fahrrad 10 in einem gesonderten Arbeitsschritt, der nachfolgend erläutert werden wird. Hierdurch wird die Montage des Kettenwerfers 14 wesentlich erleichtert, da nicht gleichzeitig auf korrekte Befestigung und ordnungsgemäße Justierung geachtet werden muß.

Zur Kalibrierung des Stellglieds 20 muß zunächst der Signalgeber 16 in den Kalibriermodus eingestellt werden. Dies erfolgt vorzugsweise dadurch, daß zwei voneinander möglichst weit entfernte Funktionstasten 30c gleichzeitig gedrückt werden. Hierdurch kann ein zufälliges Einstellen des Kalibriermodus vermieden werden.

Durch Drücken der "nach oben"-Taste 30a und der "nach unten"-Taste 30b wird hierauf ein zu justierender Gang gewählt. Hierauf erfolgt die Einstellung des Justiermodus für den zu justierenden Gang durch Drücken einer bestimmten der Funktionstasten 30c.

Durch Drücken der "nach oben"-Taste 30a und der "nach unten"-Taste 30b kann im Justiermodus das Stellglied 20 mittels über die erste Signalüberwachungseinheit 32, die Signalleitung 22 und die zweite Signalüberwachungseinheit 40 übermittelte Signale schrittweise verstellt werden, bis das Stellelement 44 eine für den zu justierenden Gang optimale Einstellung erreicht hat. Durch erneutes Drücken der bestimmten Funktionstaste wird der zweiten Signalüberwachungseinheit 40 von der Signalüberwachungseinheit 32 ein "Stellung abspeichern"-Signal übermittelt, woraufhin diese den vom Positionsdetektor 50 in dieser Stellung erfaßten Ist-Stellwert als neuen Soll-Stellwert für den gerade zu justierenden Gang in die Speichereinrichtung 52 einspeichert. Die Speichereinrichtung 52 ist hierzu als löschbarer und wieder programmierbarer Festwertspeicher, beispielsweise als EEPROM ausgebildet.

Hierauf kann die bestimmte Funktionstaste erneut gedrückt werden und über die "nach oben"-Taste 30a bzw. die "nach unten"-Taste 30b ein neuer, zu justierender Gang eingestellt werden.

Das vorstehend beschriebene Verfahren wird solange wiederholt, bis für alle zur Verfügung stehenden Gänge ein Soll-Stellwert in der Speichereinrichtung 52 abgespeichert ist. Der Kalibriermodus wird durch erneutes Drücken der beiden weit auseinanderliegenden Funktionstasten wieder ausgeschaltet.

Um eine mechanische Hysterese infolge eines Spiels des Eingriffs zwischen dem Zahnrad 42b und der Zahnstange 44 berücksichtigen zu können, kann vorgesehen sein, daß für jeden möglichen Gang zwei Soll-Stellwerte gespeichert werden, nämlich einer für ein Hinaufschalten in diesen Gang und einer für ein Hinunterschalten in diesen Gang.

Der vorstehend beschriebene Kalibriermodus kann nicht nur nach der Montage des Kettenwerfers 14 zum Abspeichern der Soll-Stellwerte in der Speichereinrichtung 52 verwendet werden. Vielmehr können die Soll-Stellwerte jedes beliebigen Gangs jederzeit korrigiert werden.

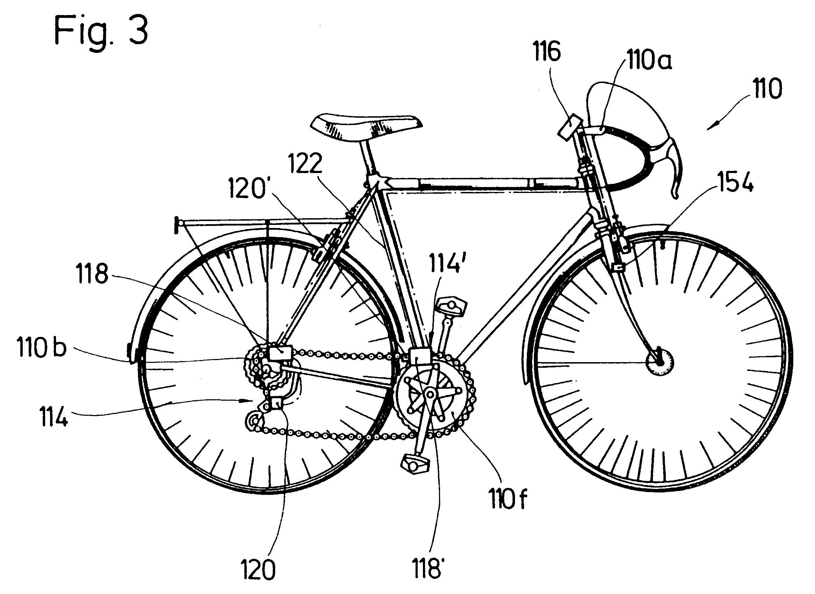

In Fig. 3 ist ein zweites mit einer Steuervorrichtung versehenes Fahrrad dargestellt, wobei analoge Teile mit gleichen Bezugszeichen versehen sind wie in Fig. 1, jedoch vermehrt um die Zahl 100. Dieses Fahrrad wird im folgenden nur insoweit beschrieben, als es sich von dem in Fig. 1 dargestellten Fahrrad unterscheidet. Ansonsten wird hiermit auf die vorstehende Beschreibung Bezug genommen.

Bei dem in Fig. 3 dargestellten Fahrrad 110 ist der am Lenker 110a angeordnete Signalgeber 116 mit zwei Kettenwerfern 114 und 114' verbunden. Der Kettenwerfer 114 ist im Bereich der Hinterradnabe 110b des Fahrrads angeordnet, während der Kettenwerfer 114' im Bereich des großen Zahnkranzes 110f angeordnet ist. Die beiden Steuereinheiten 118 und 118' sind mit dem Signalgeber 116 über eine als Daten-Bus ausgebildete Signalleitungsschleife 122 verbunden. Die vorstehend beschriebene Kalibrierung der beiden Kettenwerfer 114 und 114' erfolgt für diese beiden getrennt und in analoger Weise wie bei dem vorstehend beschriebenen Kalibrierverfahren.

Ausgehend von einem vom Fahrer eingegebenen Schaltwunsch bestimmt die Signalüberwachungseinheit des Signalgebers 116 die jeweiligen Schaltbefehle für die einzelnen Kettenwerfer 114,114'. Diese Schaltbefehle werden nacheinander, jeweils zusammen mit einem Identifizierungs-Code für den jeweiligen Kettenwerfer, bspw. Kettenwerfer 114, an die Signalleitung 122 ausgegeben. Das Signal wird von allen Steuereinheiten 118,118' der Kettenwerfer empfangen. Die adressierte Steuereinheit, hier die Steuereinheit 118 des Kettenwerfers 114, erkennt den Identifizierungs-Code in dem Signal als die eigene Adresse und liest hierauf den Schaltbefehl ein, sendet eine Empfangs-Quittung an den Signalgeber 116 und führt den übermittelten Schaltbefehl aus. Der andere Kettenwerfer, hier Kettenwerfer 114', ignoriert den Schaltbefehl. Nach Übermittlung der Empfangs-Quittung ist die Signalleitung 122 wieder frei für weitere Signalübertragungen, bspw. die Übermittlung des Schaltbefehls an den anderen Kettenwerfer 114'.

## Patentansprüche

1. Elektrische Stellvorrichtung (14), insbesondere elektrischer Kettenwerfer für ein Fahrrad, umfassend:
- ein in eine Mehrzahl von Betriebsstellungen einstellbares Stellelement (44),
- eine Antriebsvorrichtung (42) zum wahlweisen Einstellen des Stellelements (44) in jeweils eine der Betriebsstellungen,
- eine Steuereinheit (18) zum Steuern der Antriebsvorrichtung (42) durch Ausgabe von "Betriebsstellung ändern"-Signalen und "Betriebsstellung erreicht"-Signalen an die Antriebsvorrichtung (42),
- eine mit der Steuereinheit (18) verbundene Sensor-Vorrichtung (50) zum Erfassen des Momentanwerts eines einer Momentanstellung des Stellelements (44) entsprechenden Parameters,
- eine mit der Steuereinheit (18) verbundene Vorgabe-Einrichtung (52) zur Vorgabe einer Mehrzahl von Vorgabewerten des Parameters, wobei jeder dieser Vorgabewerte einer der Betriebsstellungen des Stellelements (44) entspricht,
**dadurch gekennzeichnet**,
daß das Stellelement (44) zur Festlegung, ggf. Korrektur, der Vorgabewerte in jeweils eine einer gewünschten Betriebsstellung entsprechende Soll-Stellung bewegbar und der sich ergebende Momentanwert als neuer Vorgabewert in der Vorgabe-Einrichtung (52) abspeicherbar ist.

2. Elektrische Stellvorrichtung nach Anspruch 1,
**dadurch gekennzeichnet**,
daß die Vorgabe-Einrichtung (52) ein löschbarer und wieder programmierbarer Festwertspeicher ist.

3. Elektrische Stellvorrichtung nach Anspruch 2,
**dadurch gekennzeichnet**,
daß die Steuereinheit (52) einen steuernden Mikro-Chip (40) umfaßt und daß die Vorgabe-Einrichtung (52) mit dem Mikro-Chip (40) betriebsmäßig verbunden ist.

4. Elektrische Stellvorrichtung nach Anspruch 2,
**dadurch gekennzeichnet**,
daß die Steuereinheit einen steuernden Mikro-Chip umfaßt und daß die Vorgabe-Einrichtung auf dem Mikro-Chip integriert ist.

5. Elektrische Stellvorrichtung nach einem der vorhergehenden Ansprüche,
**dadurch gekennzeichnet**,
daß die Steuereinheit (18) einen Komparator (58) umfaßt zum Vergleich des jeweiligen Momentanwerts des Parameters mit dem einer, bspw. durch einen Benutzer, extern vorgebbaren Betriebsstellung entsprechenden Vorgabewert, wobei die Steuereinheit (18) das "Betriebsstellung ändern"-Signal ausgibt, wenn der Komparator (58) eine Nicht-Übereinstimmung von Momentanwert und Vorgabewert feststellt, und das "Betriebsstellung erreicht"-Signal ausgibt, wenn der Komparator (58) eine Übereinstimmung von Momentanwert und Vorgabewert feststellt.

6. Kettenschaltung für ein Fahrrad, umfassend wenigstens eine elektrische Stellvorrichtung (14) nach einem der vorhergehenden Ansprüche.

7. Verfahren zur Festlegung, ggf. Korrektur, von Betriebsstellungen einer elektrischen Stellvorrichtung (14), insbesondere eines elektrischen Kettenwerfers für Fahrräder, umfassend:
- ein in eine Mehrzahl von Betriebsstellungen einstellbares Stellelement (44),
- eine Antriebsvorrichtung (42) zum wahlweisen Einstellen des Stellelements (44) in jeweils eine der Betriebsstellungen,
- eine Steuereinheit (18) zum Steuern der Antriebsvorrichtung (42) durch Ausgabe von "Betriebsstellung ändern"-Signalen und "Betriebsstellung erreicht"-Signalen an die Antriebsvorrichtung (42),
- eine mit der Steuereinheit (18) verbundene Sensor-Vorrichtung (50) zum Erfassen des Momentanwerts eines einer Momentanstellung des Stellelements (44) entsprechenden Parameters,
- eine mit der Steuereinheit (18) verbundene Vorgabe-Einrichtung (52) zur Vorgabe einer Mehrzahl von Vorgabewerten des Parameters, wobei jeder dieser Vorgabewerte einer der Betriebsstellungen des Stellelements (44) entspricht,
**dadurch gekennzeichnet**,
daß das Verfahren die Schritte umfaßt:
- Bewegen des Stellelements (44) in jeweils eine einer gewünschten Betriebsstellung entsprechende Soll-Stellung und
- Abspeichern des sich ergebenden Momentanwerts als neuen Vorgabewert in der Vorgabe-Einrichtung (52).
